# EUROPEAN PATENT APPLICATION

(11) **EP 2 221 748 A1**
(43) Date of publication of application: **25.08.2010**
(21) Application number: 09250496.8
(22) Date of filing: 24.02.2009
(51) Int. Cl.: G06K 17/00, G06K 7/00, H04W 88/02, H04W 88/06

(54) **Radio-frequency communication apparatus and methods**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

Apparatus and methods for transmitting radio-frequency trigger signals to a radio-frequency transponder device, said apparatus comprising: a trigger signal generation device (20) operable to generate trigger signals and to provide said trigger signals to a first signal converter (21); said first signal converter being operable to receive trigger signals from said trigger signal generation device, to convert said trigger signals into network signals capable of being carried via a network to a remote location, and to provide said network signals to a network (22); and a second signal converter (23) operable to receive network signals from a network, to convert said network signals into radio-frequency trigger signals, and to transmit said radio-frequency trigger signals to a radio-frequency transponder device (24), said radio-frequency transponder device being operable to perform an action in response to receipt of a radio-frequency trigger signal.

## Description

### Technical Field

The present invention relates to apparatus and methods for transmitting signals to radio-frequency transponder devices.

### Background to the Invention and Prior Art

Radio-frequency identification (RFID) systems are systems whereby one or more radio-frequency transponders or RFID "tags" are able to provide response information to an RFID "reader" and/or store information received from an RFID "writer" on receipt of an appropriate "trigger" signal therefrom. Often, the functions of reading and writing to RFID tags are performed by a single device, sometimes referred to as an RFID reader/writer, but also referred to simply as an RFID reader. The response information provided by RFID tags to an RFID reader is generally identification information relating to the identity of the tag or of an item with which it is associated, but may alternatively be location information, information about environmental or other conditions presently or previously experienced, or other data. In relation to "write" operations, the response information, where any such information is provided at all, may simply be confirmation that the "write" operation was successful.

The RFID reader is generally a transceiver in that it transmits radio-frequency "read" (and/or "write") signals to one or more tags that are within range and then receives radio-frequency response signals from any tags that respond. The RFID tags generally only communicate information to the RFID reader when interrogated or otherwise activated with an appropriate trigger signal, various mechanisms being available to ensure that tags only respond to readers that are authorised to interrogate them (or write to them) in order to allow for appropriate levels of security.

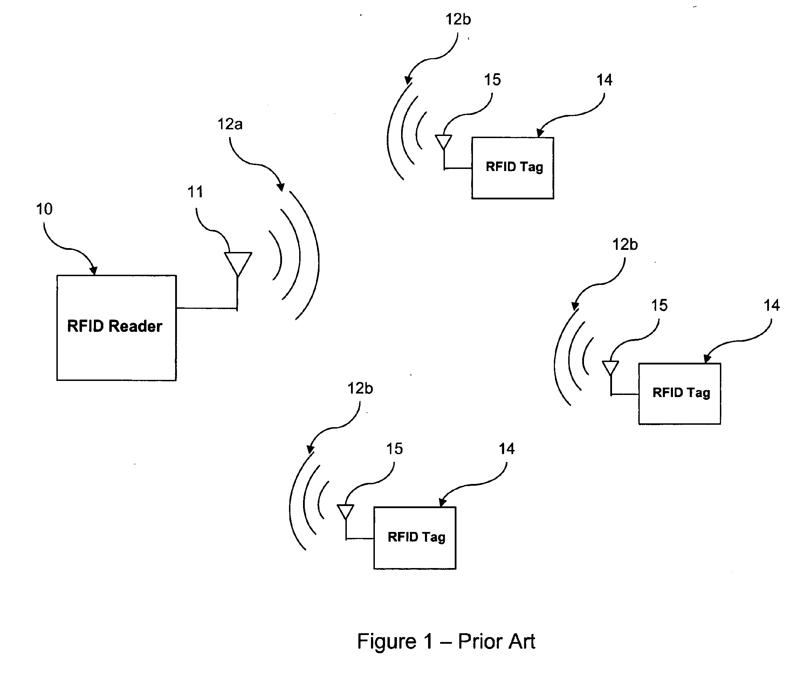

**Figure 1** illustrates a simplified block diagram of a known RFID system, the components of which will be explained in the context of a "read" operation - similar considerations would apply in the context of a "write" operation. The system includes an RFID reader 10 and one or more RFID tags 14, between which RFID signals 12 are communicated. The RFID reader 10 operates as a transceiver whereby it transmits an interrogation or "read" signal 12a, and receives response signals 12b from one or more of the RFID tags 14. The RFID reader 10 is shown with a single transmit/receive antenna 11, but may include more than one antenna to communicate more effectively with each of RFID tag 14 via its antenna 15. The RFID reader 10 may be fixed, or handheld to permit mobile scanning and interrogation of a items. The RFID tags 14 may be active, meaning they have their own "on-board" power-supply for powering the transmission of response signals and for any necessary signal processing performed by the tag, or passive, meaning they obtain any necessary power from the transmitted signal 12a for their operation. Each RFID tag 14 includes an antenna which may be printed thereon to allow the tag to remain small.

A drawback of known RFID systems is that an RFID reader needs to be in close proximity to the RFID tag, the distance generally being limited by the range at which each can receive a signal transmitted by the other. Attempts have been made to increase the communication range between readers and tags, but since the main way in which the transmission range of a tag can be increased involves providing it with a larger antenna or a more powerful power supply, there has generally been a trade-off between this and the general commercial requirement for tags to be small and cheap to manufacture.

It will be understood that it is known in the field of RFID technology for an RFID reader to be in communication with a remote database, possibly via a communication channel such as the internet, in order to obtain data concerning identification information received in a response signal from an RFID tag. Such communication with a remote database does not generally affect the manner in which the RFID reader communicates with the tag itself, however.

In another field of technology, it is known, in particular in relation to home broadband local area networks (LANs), to connect computer terminals (or other devices such as internet-enabled televisions that may use data sent using Internet Protocol (IP)) to each other and/or to an internet hub or router using pairs of devices known interchangeably as "Powerline Ethernet" adaptors, "Ethernet-over-Powerline" adaptors, "Home Plugs" or various other terms. In this field, known as powerline (sometimes power-line or "power line") networking or communications (PLC), data and/or other signals are carried along electrical transmission lines originally and principally installed to carry alternating current (AC) electrical power to/from and within premises, i.e. over the transmission and distribution stages of the electrical power systems at higher voltages, and within a building at lower voltages. Standards, methods and apparatus have been developed for and around PLC. For example, the "Broadband-over-Powerline" (BPL) standard (IEEE P1901) defines methods of sending data and other (e.g. control) signals over power lines for Internet access. Electrical devices plugged into the electrical network may communicate with each other using PLC by the transmission of modulated carrier signals over the medium of the electrical wire. Signals over WLAN, Ethernet, or the like may be sent in this manner without the cost or effort to install a separate (wired or wireless) link between the devices, within the structure of the building or otherwise. Such systems essentially use the power-line cables within a building to transmit data that could otherwise have been transmitted using a wireless internet (e.g. "Wi-Fi") connection or via Ethernet cables.

### Summary of the Invention

According to a first aspect of the present invention, there is provided an apparatus according to claim 1.

According to preferred embodiments, in use, the trigger signal generation device and the first signal converter are located at a first location while the second signal converter is located at a second location remote from the first location.

Preferably the trigger signal generation device is a radio-frequency signal generation device such as a conventional RFID reader, RFID writer, or RFID reader/writer. It may however be incorporated into a device such as a computer terminal, which may be a Wi-Fi enabled computer, an Ethernet-enabled computer, or another type of signal generation device.

The first communication protocol may the same as the third communication protocol. Both may be a standard RFID communication protocol, for example. The second communication protocol may be an Ethernet communication protocol, for example.

According to preferred embodiments, the trigger signal generation device is a read signal generation device such as a conventional RFID reader or RFID reader/writer, operable to generate read signals, and the second signal converter is operable to transmit radio-frequency read signals corresponding thereto to the radio-frequency transponder device. Such embodiments are generally applicable in relation to communicating with radio-frequency transponder devices capable of providing a radio-frequency response signal containing response data in response to receipt of a radio-frequency read signal.

Alternatively, the trigger signal generation device may be a write signal generation device such as a conventional RFID writer, operable to generate write signals, and the second signal converter is operable to transmit radio-frequency write signals corresponding thereto to the radio-frequency transponder device. Such embodiments are generally applicable in relation to communicating with re-writable radio-frequency transponder devices, i.e. those capable of storing data thereon in response to receipt of a radio-frequency write signal. In such embodiments, the radio-frequency transponder device may further be capable of providing a radio-frequency response signal containing confirmation data indicating that data has been stored thereon in response to receipt of a radio-frequency write signal.

According to preferred embodiments, the apparatus when in use further comprises a radio-frequency reader device located at the second location (e.g. remote from the location of the trigger signal generation device but in the vicinity of one or more transponder devices) and operable to receive radio-frequency response signals from said radio-frequency transponder device. In such embodiments, the radio-frequency reader device may be further operable to provide signals to the second signal converter containing data derived from radio-frequency response signals received from the one or more transponder devices. Further, the second signal converter may be operable to convert signals received from the radio-frequency reader device into network signals containing data derived from radio-frequency response signals received by the radio-frequency reader device from a radio-frequency transponder device, the network signals being capable of being carried to a remote location via a network. The first signal converter may be further operable to receive network signals from a network and to convert the network signals into response signals containing response data corresponding to response data contained in radio-frequency response signals provided by a radio-frequency transponder device. The trigger signal generation device may further be operable to receive response signals from the first signal converter and to derive data therefrom indicative of data contained in response signals received by the radio-frequency reader device from the radio-frequency transponder device.

The one or more radio-frequency transponder devices may be conventional active or passive RFID tags. Alternatively, they may be ZigBee tags or other types of transponder devices.

According to preferred embodiments the network is a power-line network, which may be that of a building (or a part thereof) or a group of buildings, or it may be that of a wider (e.g. local or national) area for example. It may be an existing network not built with the intention of being used for the transmission of radio-frequency trigger signals at all, or it may be a network built for that purpose. It may be another type of network, such as a fibre-optic network however, in which case appropriate signal converters may be chosen such as to enable trigger signals to be converted into optical signals capable of being carried via such a network to remote locations before being received therefrom and converted into radio-frequency trigger signals.

According to a second aspect of the present invention, there is provided a method according to claim 19.

The various options and preferred embodiments referred to above in relation to the first aspect are also applicable in relation to the second aspect.

### Brief Description of the Drawings

A preferred embodiment of the present invention will now be described with reference to the appended drawings, in which:
Figure 1 shows a schematic diagram of a prior art system;
Figure 2 illustrates an overview of an RFID reader communication with a plurality of RFID tags via a power-line network;
Figure 3 shows the components of a generalised embodiment of the present invention; and
Figures 4, 5 and 6 show various specific embodiments of the present invention.

### Description of Preferred Embodiments of the Invention

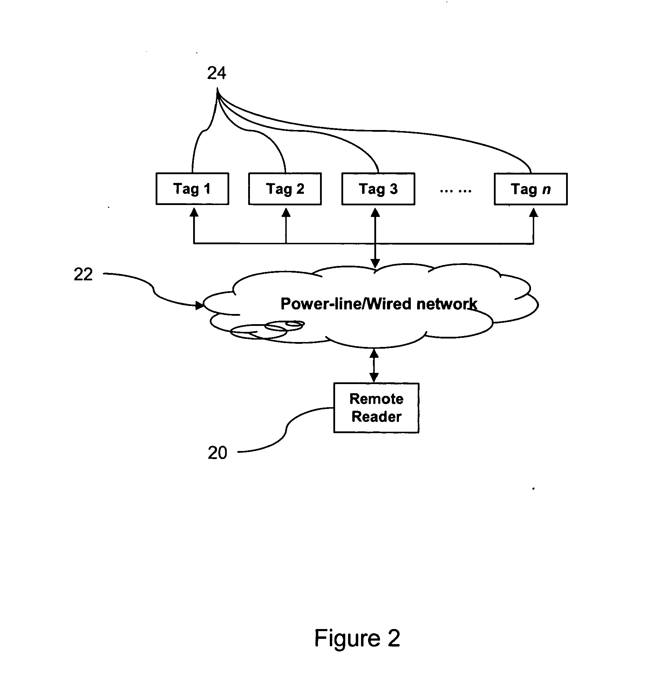

With reference to **Figure 2****,** there is shown a generalised overview of the components involved in allowing an RFID reader to obtain information from one or more of a set of RFID tags at a location remote from the RFID reader via the power-lines of an electrical power supply network. For an understanding of this overview, the system can be though of as comprising essentially three components: (1) the RFID reader 20, (2) the power-lines of the electrical power supply network 22, and (3) one or more active or passive RFID tags 24. Additional components responsible for coupling RFID signals on to, and decoupling RFID signals from the power supply network will be described later.

For the time being, the power supply network 22 can be regarded simply as a black-box, facilitating the input and output communications between the tags and the reader. The reader-and-tags' signal ID may be retained to facilitate signal discrimination throughout the reception and transmission process. Hence from the tags' viewpoint, the power supply network black-box appears to the tags simply to be performing the functions of a normal reader. Similarly, from the reader's standpoint, the front-end of the power supply network black-box appears to the reader simply to be performing the function of the tags. In other words, the black-box, by being a communications facilitator, seems to be invisible at the interfaces between the tags and the reader, allowing the operation of the tags and the reader to be performed as if they are not remote and are simply communicating directly with one another. Note that the above is applicable regardless of whether the RFID systems are based on active (battery-powered) or passive (non-battery-powered) tag functionality.

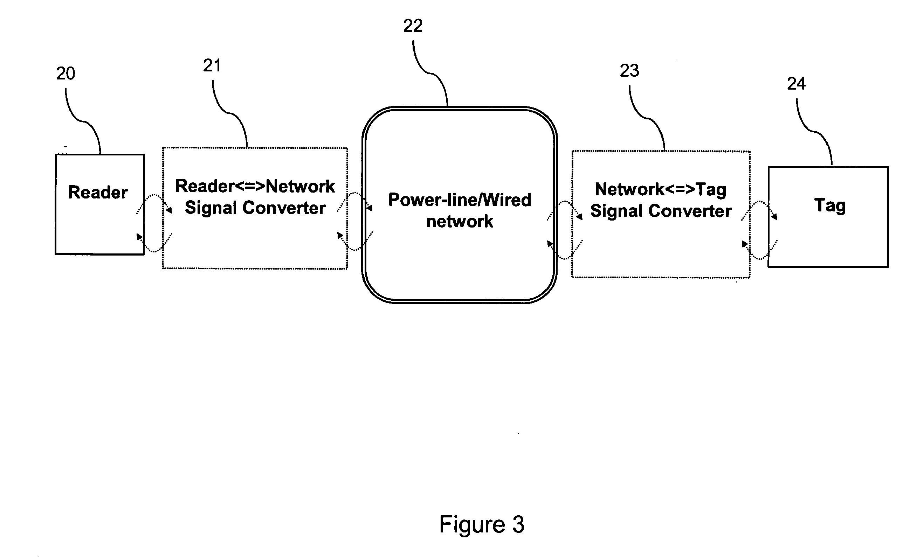

**Figure 3** provides a generalised illustration of an RFID system according to an embodiment of the invention. For simplicity in this and the later figures, only one RFID tag is shown, but it will be understood that there may be several, either grouped together in one location remote from the RFID reader, or in two or more different locations remote from the RFID reader.

Between the RFID reader 20 and the power-line network 22, there is a first signal converter 21. As will be understood from the specific implementation examples below, depending on the specific context, the first signal converter 21 may be in contact by wires or wirelessly with the reader 20 and to the power-line network 22, and is firstly responsible for converting radio-frequency "read" signals generated by the reader 20, which are generally serial binary data modulated on to a radio frequency (RF) carrier signal, into signals that may be coupled onto the power-line network 22. Similarly, between the power-line network 22 and the RFID tag(s) 24, there is a second signal converter, 23 which is responsible for converting signals decoupled from the power-line network 22 into radio-frequency "read" signals suitable for triggering an RFID response from the tag(s) 24. The second signal converter 23 has a second function of converting RFID response signals received from the tag(s) 24 in response to "read" signals (provided during what may be regarded as an outward "read" path) into signals that may be coupled onto the power-line network 22 in order to convey the tag response back to the reader during what may be regarded as a return or "response" path, and similarly, the first signal converter 21 has a second function of converting signals decoupled from the power-line network 22 into radio-frequency "response" signals indicative of the response signals provided by the tag(s) 24.

It will be understood that the outward "read" path need not be the same as the return or "response" path. In some contexts it may be appropriate for one or more remote readers to perform the task of generating and sending the "read" signals, and one or more other remote readers to perform the task of receiving the eventual response signals conveyed from the tags via the power-line network.

The power-line network may be that of a single building or group of buildings. It may however be a wider power-line network covering a local or national area for example, provided that the signal converters are capable of interacting with each other from their respective locations whereby to exchange signals with each other. Where the power-line network includes transformers and/or sub-stations, it may be necessary to use transformer by-pass components to filter the desired signal from the power supply before it passes through the transformer and re-introduce it afterwards. Another possibility is to convert the "read" signal to a sufficiently low frequency for the portion of its path through the power-line network that it may pass through transformers. This may decrease the possible data rate but this need not be a problem for some RFID applications, which only require relatively low-rates of data transmission.

The following (non-limiting) Implementation Examples are intended to illustrate some specific ways in which signals may be sent and received by different types of reader and tag devices, or combinations of reader and tag devices, via a power-line network. Other combinations of devices and other variations are of course possible.

### First Implementation Example - Conventional RFID Reader and Tags

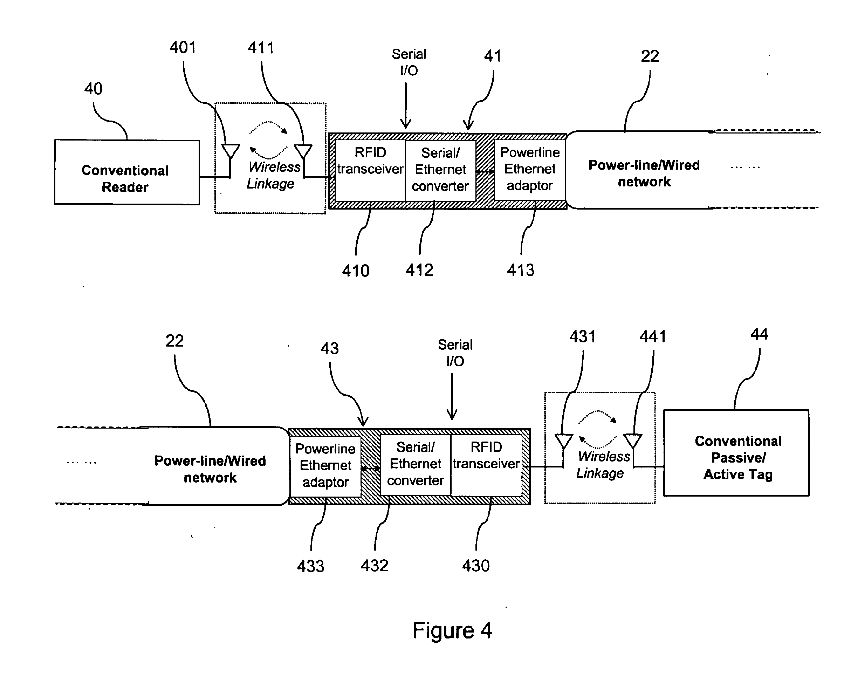

This implementation example, which will be described with reference to **Figure 4****,** relates to an embodiment whereby signals may be sent between a conventional RFID reader and one or more RFID tags using conventional or standard "off-the-shelf" components.

The conventional RFID reader 40 is in wireless communication using an in-built antenna 401 with a first signal converter module 41. The first signal converter module 41 comprises a standard RFID transceiver 410 (such as the ISM band transceiver made by "Analog Devices" and having Model No. EVAL-ADF70XXMBZ2) which has an antenna 411, a standard Serial/Ethernet converter 412 (such as the NetPort Ethernet/RS232 Cable Adapter having Model No. LAN01) and a standard Powerline Ethernet adaptor 413 (such as the "Home Plug" made by Solwise and having Model No. NET-PL-200AV). Thus RFID "read" signals transmitted by the RFID reader 40 may be received by the RFID transceiver 410 still as serial binary data modulated on to an RF carrier signal, passed via a Serial Input/Output interface of the Serial/Ethernet converter 412 to the Powerline Ethernet adaptor 413, which converts them into signals that may be carried to a remote location via the power-line network 22 using an Ethernet communication protocol. The first signal converter module 41 is connected to the power-line network 22, onto which it couples the converted signals.

At another location remote from that of the reader 40 and in the vicinity of one or more conventional RFID tags 44, a second signal converter 43 is connected to the power-line network 22. This comprises an RFID transceiver 430 having an antenna 431, a Serial/Ethernet converter 432 and a Powerline Ethernet adaptor 433, which components may be similar to or the same as the components making up the first signal converter module 41. The second signal converter 43 is in wireless communication using antenna 431 of RFID transceiver 430 with the or each RFID tag 44 via its antenna 441. Thus, signals that have been carried through the power-line network 22 according to an Ethernet protocol may be decoupled from the power-line network 22 by the adaptor 433 of the second signal converter 43 and converted to RFID "read" signals which may then be transmitted in the vicinity of the RFID tag(s) 44 in such a way as to trigger an RFID "response" signal therefrom. The data contained in the "response" signals may then traverse a "return leg", corresponding to the reverse of the "outward leg" traversed by the data contained in the "read" signals, in a manner corresponding to that set out above, whereby to reach the reader 40 as RFID "response" signals.

It will be understood that the signal converters 41 and 43 need not be made of separate "off-the-shelf" components such as those listed above, but may be manufactured as dedicated units having the necessary functionality of the signal converters as described above.

### Second Implementation Example - Wi-Fi Enabled RFID Reader and Tags

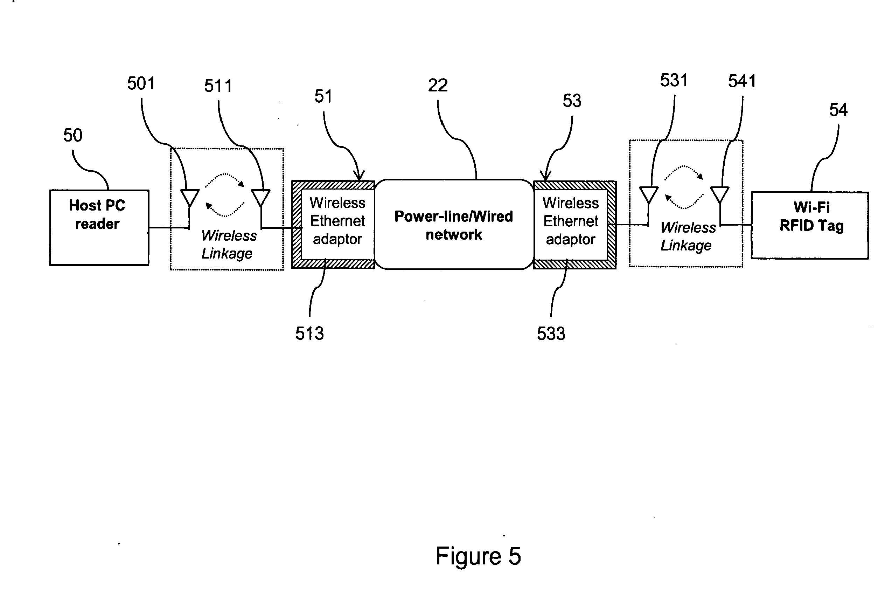

This implementation example, which will be described with reference to **Figure 5****,** relates to an embodiment whereby signals may be sent between a reader component of a Wi-Fi enabled computer terminal and one or more Wi-Fi compatible RFID tags. Due to in-built Wi-Fi pre-processors in each of the tags and the reader, the RFID tags and reader are such that their signalling is based on Wi-Fi communications, so the signal converters do not need to include separate Serial/Ethernet converters, and may simply perform the functions of coupling/decoupling signals to/from the power-line network.

The reader 50 is in wireless communication using an in-built Wi-Fi antenna 501 with first signal converter module 51. The first signal converter module 51 comprises a wireless Ethernet adaptor 513 (such as the Ethernet/Wireless "Home Plug" made by Solwise having Model No. NET-PL-85PEW) having an antenna 511. Thus "read" signals generated and transmitted by the reader 50 may be received by the wireless Ethernet adaptor 513, which converts them into signals that may be carried to a remote location via the power-line network 22 using an Ethernet communication protocol. The first signal converter module 51 is connected to the power-line network 22, onto which it couples the converted signals.

At another location remote from that of the reader 50 and in the vicinity of one or more Wi-Fi enabled RFID tags 54 (such the Wi-Fi RFID Active Tag from Ekahau having Model No. T301-A), a second signal converter 53 is connected to the power-line network 22. This second signal converter 53 comprises a wireless Ethernet adaptor 533 which may be of the same type as adaptor 513. The second signal converter 53 is in wireless communication using antenna 531 with the or each RFID tag 54 via its antenna 541. Thus, signals that have been carried through the power-line network 22 according to an Ethernet protocol may be decoupled from the power-line network 22 by the adaptor 533 of the second signal converter 53 and converted to RFID "read" signals which may then be transmitted in the vicinity of the RFID tag(s) 54 in such a way as to trigger an RFID "response" signal therefrom. The data contained in the "response" signals may then traverse a "return leg", corresponding to the reverse of the "outward leg" traversed by the data contained in the "read" signals, in a manner corresponding to that set out above, whereby to reach the reader 50 as "response" signals according to a protocol appropriate to the reader 50.

### Third Implementation Example - Ethernet-Enabled Reader, ZigBee Tags

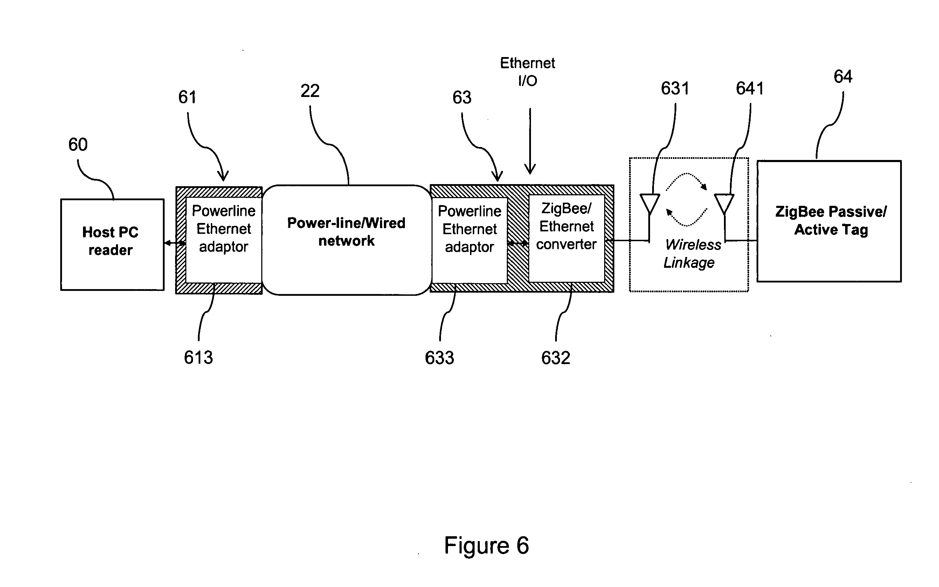

This implementation example, which will be described with reference to **Figure 6****,** relates to an embodiment whereby signals may be sent between a reader component of an Ethernet-enabled computer terminal and one or more "ZigBee" tags. (ZigBee is the name of a specification for a suite of high-level wireless communication protocols that use small, low-power digital radio-frequency transmission based on the IEEE 802.15.4 standard for wireless personal area networks (WPANs). ZigBee technology is intended to be simpler and less expensive than other WPANs such as Bluetooth, and is targeted at radio-frequency applications in which low data rate, long battery life, and secure networking are desirable. It will be understood that ZigBee is not an alternative to RFID, but is rather a network platform that enables RFID devices to communicate with each other as well as with other networked devices.)

An Ethernet module is incorporated into the reader, and a ZigBee module and antenna is incorporated into each of the tags, thus the signal converters again do not need to include separate Serial/Ethernet converters themselves. Thus, in this example, the communication between the reader and the power-line network may be wired, whereas the communication between the power-line network and the tag(s) may be wireless.

The reader 60 is in wired communication with first signal converter module 61, which comprises a Powerline Ethernet adaptor 613 (such as the Compact Serial/Ethernet LAN converter having Model No. ES1A). This converts "read" signals into signals that may be carried to a remote location via the power-line network 22 using an Ethernet communication protocol. The first signal converter module 61 is connected to the power-line network 22, onto which it couples the converted signals.

At another location remote from that of the reader 60 and in the vicinity of one or more ZigBee tags 64 (such as Active ZigBee RFID tags having Model No. 006-QID 009), a second signal converter 63 is connected to the power-line network 22. This second signal converter 63 comprises a Powerline Ethernet adaptor 633 which may be of the same type as adaptor 613, and a ZigBee/Ethernet converter 632 (such as ZigBee-Ethernet Gateway from MeshNetics having Model No. EGW-A1281). The second signal converter 63 is in wireless communication using ZigBee antenna 631 with the or each ZigBee tag 64 via its in-built antenna 641. Thus, signals that have been carried through the power-line network 22 according to an Ethernet protocol may be decoupled from the power-line network 22 by the adaptor 633 of the second signal converter 63 and converted to ZigBee "read" signals which may then be transmitted in the vicinity of the ZigBee tag(s) 64 in such a way as to trigger a "response" signal therefrom. The data contained in the "response" signals may then traverse a "return leg", corresponding to the reverse of the "outward leg" traversed by the data contained in the "read" signals, in a manner corresponding to that set out above, whereby to reach the reader 60 as "response" signals according to a protocol appropriate to the reader 60.

### Warehouse Scenario

A potential application of the above relates to a warehouse scenario. Items such as consumer products (awaiting delivery, for example) may be stored in a warehouse, each with an RFID tag associated therewith providing product information. In order to obtain the information (for stock-taking reasons, for example), prior art systems would require an individual to go around the warehouse with a mobile RFID reader to read the individual tags one by one, or possibly a few at a time. Instead of this, provided that there are electrical power-points in the warehouse spaced within reception range of the RFID tags, these power-points may be used as set out above to enable remote RFID management for the items in the warehouse via its existing power-line infrastructure, allowing the tags' data to be read and sent, possibly simultaneously, to a remote location, via the electrical power-points, without the need for an individual to even enter the warehouse, or for a full RFID reader device to be brought into the warehouse, let alone moved into close proximity with any of the tags.

## Claims

1. An apparatus for transmitting radio-frequency trigger signals to a radio-frequency transponder device, said apparatus comprising:
a trigger signal generation device operable to generate trigger signals and to provide said trigger signals to a first signal converter using a first communication protocol;
a first signal converter operable to receive trigger signals from said trigger signal generation device, to convert said trigger signals into network signals capable of being carried via a network to a remote location using a second communication protocol different to said first communication protocol, and to provide said network signals to a network; and
a second signal converter operable to receive network signals from a network, to convert said network signals into radio-frequency trigger signals, and to transmit said radio-frequency trigger signals to a radio-frequency transponder device using a third communication protocol different to said second communication protocol, said radio-frequency transponder device being operable to perform an action in response to receipt of a radio-frequency trigger signal.

2. An apparatus according to claim 1 wherein said trigger signal generation device and said first signal converter are located at a first location and said second signal converter is located at a second location remote from said first location.

3. An apparatus according to claim 1 or 2 wherein said trigger signal generation device is a radio-frequency signal generation device.

4. An apparatus according to claim 1, 2 or 3 wherein said first communication protocol is the same as said third communication protocol.

5. An apparatus according to any of the preceding claims wherein said second communication protocol is an Ethernet communication protocol.

6. An apparatus according to any of the preceding claims wherein said trigger signal generation device is operable to generate read signals, and said second signal converter is operable to transmit radio-frequency read signals corresponding thereto to said radio-frequency transponder device.

7. An apparatus according to any of the preceding claims wherein said radio-frequency transponder device is operable to perform an action comprising providing a radio-frequency response signal containing response data in response to receipt of a radio-frequency read signal.

8. An apparatus according to any of the preceding claims wherein said apparatus further comprises a radio-frequency reader device located when in use at said second location and operable to receive radio-frequency response signals from said radio-frequency transponder device.

9. An apparatus according to claim 8 wherein said radio-frequency reader device is further operable to provide signals to said second signal converter containing data derived from radio-frequency response signals received from said radio-frequency transponder device.

10. An apparatus according to claim 8 or 9 wherein said second signal converter is operable to convert signals received from said radio-frequency reader device into network signals containing data derived from radio-frequency response signals received by said radio-frequency reader device from said radio-frequency transponder device, said network signals being capable of being carried to a remote location via a network.

11. An apparatus according to claim 8, 9 or 10 wherein said first signal converter is further operable to receive network signals from a network and to convert said network signals into response signals containing response data corresponding to response data contained in radio-frequency response signals provided by said radio-frequency transponder device.

12. An apparatus according to any of claims 8 to 11 wherein said trigger signal generation device is further operable to receive response signals from said first signal converter and to derive data therefrom indicative of data contained in response signals received by said radio-frequency reader device from said radio-frequency transponder device.

13. An apparatus according to any of the preceding claims wherein said trigger signal generation device is operable to generate write signals, and said second signal converter is operable to transmit radio-frequency write signals corresponding thereto to said radio-frequency transponder device.

14. An apparatus according to any of the preceding claims wherein said radio-frequency transponder device is operable to perform an action comprising storing data thereon in response to receipt of a radio-frequency write signal.

15. An apparatus according to claim 14 wherein said radio-frequency transponder device is further operable to perform an action comprising providing a radio-frequency response signal containing confirmation data indicating that data has been stored thereon in response to receipt of a radio-frequency write signal.

16. An apparatus according to any of the preceding claims wherein said trigger signal generation device is an RFID reader/writer device.

17. An apparatus according to any of the preceding claims wherein said radio-frequency transponder device is an RFID tag.

18. An apparatus according to any of the preceding claims wherein said network is a power-line network and wherein said second communication protocol is a power-line communication protocol.

19. A method of transmitting radio-frequency trigger signals to a radio-frequency transponder device, said method comprising:
generating trigger signals and providing said trigger signals to a first signal converter using a first communication protocol;
converting said trigger signals into network signals capable of being carried via a network to a remote location using a second communication protocol different to said first communication protocol, and providing said network signals to a network; and
receiving network signals from said network at a second signal converter at a location remote from said first signal converter, converting said network signals into radio-frequency trigger signals, and transmitting said radio-frequency trigger signals to a radio-frequency transponder device using a third communication protocol different to said second communication protocol, said radio-frequency transponder device being operable to perform an action in response to receipt of a radio-frequency trigger signal.
